# EUROPÄISCHE PATENTSCHRIFT

(11) **EP 1 339 557 B1**
(45) Veröffentlichungstag und Bekanntmachung des Hinweises auf die Patenterteilung: **10.01.2007**
(21) Anmeldenummer: 02779203.5
(22) Anmeldetag: 07.11.2002
(51) Int. Cl.: B60G 21/055, F16C 11/06

(54) **HÜLSENGELENK**
BUSHING JOINT
ARTICULATION A DOUILLE

(30) Priorität: 07.11.2001 DE 10154193
(43) Veröffentlichungstag der Anmeldung: 03.09.2003
(73) Patentinhaber: ZF Lemförder Metallwaren AG, 49441 Lemförde (DE)
(72) Erfinder: REDDEHASE, Günter, 49448 Brockum (DE); REILMANN, Klaus, 49577 Ankum (DE)
(86) Internationale Anmeldenummer: PCT/DE2002/004134
(87) Internationale Veröffentlichungsnummer: WO 2003/039895

(56) Entgegenhaltungen:
- EP-A- 0 567 002
- EP-A- 0 770 506
- EP-A- 0 900 677
- DE-A- 2 752 456
- DE-A- 2 916 982
- DE-B- 2 624 430
- DE-U- 9 420 230
- US-A- 3 188 152
- US-A- 5 993 065

## Beschreibung

Die Erfindung betrifft ein Hülsengelenk, wie es vorwiegend zur Stabilisatoranbindung in Kraftfahrzeugen zum Einsatz kommen kann.

Die in diesem Bereich bislang verwendeten Gummilager neigen ferner in Folge der radnahen starken Belastung mit Verunreinigungen und aggressiven Medien zu einem vorzeitigen Verschleiß. Darüber hinaus stellt sich das Problem, dass beim Ein- und Ausfedern des Rades der Stabilisator eine überhöhte radiale Vorspannung aufweist, die ihn in unerwünschter Weise überlastet. Insbesondere ist für den Stabilisatorstab ein Biegemoment unerwünscht, weil hierdurch das Ansprechverhalten des Stabilisators in seinem normalen Betrieb im Kraftfahrzeug gemindert wird. Regulär sind Stabilisatoren nur für die Aufnahme von Torsionsspannungen geeignet und ausgelegt. Neben der Gefahr der Beschädigung des Stabilisators wird darüber hinaus auch das Gummilager, welches den Stabilisatorstab aufnimmt, verzwängt, was zu einer Zerstörung der innermolekularen Struktur derartiger Elastomerlager führen kann, sodass diese vorzeitig ausfallen. Die bislang im Einsatz befindlichen Gummilager oder Hülsengelenke weisen zudem häufig den Nachteil auf, dass sie quietschende Geräusche bei Bewegung des Stabilisators erzeugen, wobei darüber hinaus aufgrund hoher Reibungseinflüsse das Ansprechverhalten und damit der Wirkungsgrad des Stabilisators unzureichend ist.

DEU9420230 offenbart ein Hülsengelenk mit einer Lagerbaugruppe, wobei die Lagerbaugruppe ein Gehäuse sowie eine in das Gehäuse eingesetzte Lagerschale zur gleitbeweglichen Lagerung eines mit einer gekrümmten Lagerfläche ausgestatteten Lagerkörpers aufweist und der Lagerkörper auf einer auf das zu lagernde Bauteil aufgesetzter Hülse angeordnet ist, sodass infolge eines Gleitkontaktes zwischen der Lagerbaugruppe und der Hülse eine Gleitbewegung der Lagerbaugruppe in Längsrichtung des Hülsengelenkes ermöglicht ist.

Der Erfindung liegt die technische Aufgabenstellung zu Grunde, ein Hülsengelenk zu schaffen, das toleranzoptimiert und reibungsarm ist und sowohl Kippbewegungen als auch Längsbewegungen des zu lagernden Bauteiles ausgleichen kann.

Gelöst wird diese technische Aufgabenstellung mit den Merkmalen des Patentanspruches 1.
Weitere Ausgestaltungen der Erfindung sind Gegenstand der Unteransprüche.

Ein erfindungsgemäßes Hülsengelenk besteht dabei grundsätzlich aus einer Lagerbaugruppe sowie einem Innenteil. Die Lagerbaugruppe setzt sich aus einem Gehäuse sowie einer in das Gehäuse eingesetzten Lagerschale zur gleitbeweglichen Lagerung eines mit einer gekrümmten Lagerfläche ausgestatteten Lagerkörpers zusammen. Der Lagerkörper ist auf seiner der gekrümmten Lagerfläche abgewandten, inneren Oberfläche mit einer Gleitschicht ausgestattet. In Folge des Gleitkontaktes zwischen der Lagerbaugruppe und dem diesem zugeordneten Innenteil ist demnach eine Gleitbewegung der Lagerbaugruppe in Längsrichtung des Hülsengelenkes möglich.

Ein derartiges erfindungsgemäßes Hülsengelenk weist den Vorteil auf, dass hier eine zu bekannten Hülsengelenkausführungen zusätzliche axiale Gleitlagerung geschaffen wurde. Durch die Trennung von Lagerschale und Gleitschicht kann die Werkstoffwahl für diese Bauteile optimiert und ihren speziellen Anforderungen entsprechend angepasst werden. Damit ist es möglich, die bislang schädlich auf das Lager sowie das zu lagernde Bauteil Einfluss nehmenden Kraftwirkungen durch eine axiale Bewegung auszugleichen. Die axiale Beweglichleit des erfindungsgemäßen Hülsengelenkes verhindert zudem die Einleitung von Biegekräften in das zu lagernde Bauteil. Sofern es sich hierbei um einen Stabilisator für ein Kraftfahrzeug handelt, wird dadurch das Ansprechverhalten desselben insgesamt verbessert.
Beispielsweise kann bei Einsatz eines erfindungsgemäßen Hülsengelenkes infolge seiner kompakten Bauweise die Lagerung eines Stabilisators in einem Kraftfahrzeug sehr radnah erfolgen, sodass einerseits eine Wirkungsgraderhöhung des Stabilisators zu verzeichnen ist und andererseits auf die bislang erforderlichen Pendelstützen verzichtet werden kann.
Das erfindungsgemäße Hülsengelenk ist zudem einfach aufgebaut und damit wirtschaftlich und kostengünstig herstellbar.

Gemäß einer weiteren Ausgestaltung der Erfindung wird vorgeschlagen, das nach außen abgedichtete Hülsengelenk mit einer Fettschmierung an den gleitbeweglichen Lagerteilen auszuführen. Durch die Fettschmierung und eine geeignete Materialwahl des einzusetzenden Fettes kann einerseits die Lebensdauer eines erfindungsgemäßen Hülsengelenkes in vorteilhafter Weise verbessert werden und andererseits werden damit die bislang in Hülsengelenken als störend empfundenen Quietschgeräusche in extremen Belastungssituationen vermieden. Theoretisch wären für die Gleitlagerung zwischen Lagerschale und Lagerkörper sowie die Gleitlagerung zwischen Innenteil und Gleitschicht sogar zwei unterschiedliche Fettsorten einsetzbar, was in Abhängigkeit von der Werkstoffpaarung durchaus sinnvoll sein kann.

Um das Eindringen von Verunreinigungen und aggressiven Medien wie Öle oder Laugen bzw. salzhaltige Flüssigkeiten in das Lagerinnere zu vermeiden, wird die erfindungsgemäße Lösung dahingehend weiter ausgestaltet, dass sie vorzugsweise zwei Dichtungsbälge aufweist, deren erster Randbereich in eine Gehäuseaufnahme eingesetzt ist und deren zweiter Randbereich dichtend an dem Innenteil angesetzt wird. Somit ist in einfacher Weise eine hermetische Abschirmung der inneren Hülsengelenkbauteile gegenüber der Umgebung möglich.

Als Gehäuseaufnahme kann gemäß einer Ausgestaltung dieses Gedankens eine Nut in der Gehäuseaußenoberfläche oder ein mit dem Gehäuse verbundener, den Dichtungsbalgrandbereich aufnehmender Verschlussring dienen. Der Verschlussring kann dabei in an sich bekannter Weise durch Umformen einer Gehäusekante mit dem Gehäuse verbunden werden, was beispielsweise mittels eines Rollvorganges möglich ist. Um eine Doppelfunktion des Verschlussringes zu gewährleisten, kann dieser jedoch gleichzeitig dafür zum Einsatz kommen, die Lagerschale innerhalb des Gehäuses festzusetzen und sie ggf. vorzuspannen. Durch eine derartige Maßnahme lassen sich die Reibmomente innerhalb der Lagerbaugruppe gezielt in positiver Weise beeinflussen. Darüber hinaus ist es selbstverständlich möglich, die Dichtungsbälge zur Erzielung einer Verbesserung ihrer Abdichtung mittels Spannringen an den zugeordneten Bauteilen festzulegen.

Der Aufgabenstellung der Erfindung folgend, die Reibung innerhalb des Hülsengelenkes insgesamt zu verbessern, wird darüber hinaus vorgeschlagen, die Gleitschicht aus einem reibungsarmen Kunststoff oder aus einem synthetischen Kautschuk zu erzeugen. Hier ist bei der Wahl des Werkstoffes für die Gleitschicht den erforderlichen Reibwerten der Gleitpaarung Rechnung zu tragen. In jedem Fall ist es erfindungsgemäß sinnvoll, wenn der Gleitschichtwerkstoff ein spritzbarer Kunststoff oder Kautschuk ist. Dies erleichtert die Verarbeitung des Werkstoffes, so dass er beispielsweise auch unmittelbar an den Lagerkörper angespritzt werden kann. Dadurch lässt sich die Zahl der aufeinander folgenden Herstellungsschritte in erheblichem Maße reduzieren. Es ist jedoch ebenso möglich, die Gleitschicht und den Lagerkörper getrennt voneinander herzustellen, um sie anschließend über eine Presspassung miteinander zu verbinden.

Ein erfindungsgemäßes Hülsengelenk ist insbesondere auch deshalb von entscheidendem Vorteil gegenüber bekannten Ausführungen, weil hierbei entsprechend einer sinnvollen Ausgestaltung der Erfindung eine fettgeschmierte mit einer vorgespannten Gleitlagerung kombiniert wird. Demgemäß ist es sinnvoll, wenn die Gleitschicht unter einer Vorspannung auf das Innenteil aufgesetzt ist. Dadurch kann einerseits die Geräuschbildung reduziert bzw. gänzlich vermieden werden und andererseits ist ein die Lagerungsparameter beeinflussendes Gelenkspiel abwendbar. Mit einer derartigen Maßnahme kann demnach eine reibungsoptimierte Gleitlagerung geschaffen werden.

Um die Fettschmierung eines erfindungsgemäßen Hülsengelenkes über die gesamte Lebensdauer des Hülsengelenkes zu gewährleisten, wird darüber hinaus vorgeschlagen, die Gleitschicht an ihrer Kontaktoberfläche zum Innenteil mit Fett befüllten Schmiertaschen auszustatten. Die Vermeidung des Ausweichens des Fettes aus den Schmiertaschen kann in einfacher Weise dadurch erreicht werden, dass die Gleitschicht an der derselben Kontaktoberfläche eine Labyrinthdichtung aufweist, die vorzugsweise, jedoch nicht zwingend, an den äußeren Randbereichen der Gleitschicht vorzusehen ist. Dadurch wird auch bei Bewegungen der Gleitlagerteile für die Axialbewegung der Lagerbaugruppe relativ zueinander ein Fettaustritt wirkungsvoll vermieden. Die Lebensdauer eines derartigen erfindungsgemäßen Hülsengelenkes kann in entscheidender Weise verbessert werden.

Im Zuge der Vereinfachung der Herstellung des Hülsengelenkes wird darüber hinaus vorgeschlagen, das Innenteil als ein gezogenes, vorzugsweise aus Aluminium hergestelltes, rohrförmiges Bauteil auszuführen. Aluminium ist deshalb besonders geeignet, da es einerseits ein idealer Reibpartner ist und andererseits keinen zusätzlichen Oberflächenschutz benötigt. Darüber hinaus bietet Aluminium verglichen mit anderen Materialien auch erhebliche Gewichtsvorteile.
Das Innenteil wird
mittels einer Presspassung auf das zu lagernde Bauteil aufgesetzt. Um die Gleitlagerung durch diese Verbindung nicht mehr zu beeinflussen als unbedingt notwendig, sollte darauf geachtet werden, dass die Presspassung bevorzugt im Bereich der Anlagen der Randbereiche der Dichtungsbälge am Innenteil vorgesehen wird.
Als zu lagerndes Bauteil kann, wie bereits ausgeführt wurde, ein Stabilisatorstab eines Kraftfahrzeuges eingesetzt werden. Die Presspassung zwischen Innenteil und zu lagerndem Bauteil (Stabilisatorstab) hat den entscheidenden Vorteil, dass keine zusätzlichen Montageschritte erforderlich sind, um das erfindungsgemäße Hülsengelenk in seiner vorgeschriebenen Position an dem zu lagernden Bauteil festzulegen. Die Montage vereinfacht sich damit erheblich.

Eine sehr vorteilhafte Weiterbildung der Erfindung besteht ferner darin, dass das Hülsengelenk mittels eines Flanschlagers oder über am Gehäuse vorhandene Laschen unmittelbar am unteren Querlenker eines Kraftfahrzeuges befestigt werden kann. Eine derartige Montage des Hülsengelenkes gestattet eine Radaufhängung ohne die bislang erforderlichen Pendelstützen. Diese Bauteile können komplett eingespart werden, so dass sich ein erfindungsgemäßes Hülsengelenk nicht nur durch seine vorteilhafte wirtschaftlichere Herstellbarkeit auszeichnet, sondern darüber hinaus die gesamte Radaufhängung eines Kraftfahrzeuges in erheblichem Maße vereinfacht und damit verbessert werden kann.

Bei dem vorgestellten Hülsengelenk nach der hier beschriebenen Erfindung wurde erstmals ein Hülsengelenk geschaffen, das eine zusätzliche axiale Gleitlagerung aufweist. Es ist als geschlossenes Hülsengelenk mit einer Fettschmierung ausgeführt und weist damit eine axiale Verschiebefunktion auf. Das Verschleißverhalten konnte in erheblichem Maße verbessert werden. Zudem sind störende quietschende Geräusche im Bereich der Kraftfahrzeugradaufhängung vermeidbar. Durch die kompakte Bauweise einer radseitigen Stabilisatorlagerung, die bei entsprechend ausgelegter Lagerung rahmenseitig keine Biegekräfte in den Stabilisator einleitet, wird somit ein insgesamt verbessertes Ansprechverhalten des Stabilisators in einem Kraftfahrzeug erreicht. Die Stabilisatorlagerung kann radseitig sehr weit außen am Querlenker positioniert werden. Dadurch wird ebenfalls das Ansprechverhalten des Stabilisators verbessert und die Radaufhängung qualitativ optimiert.

Eine bevorzugte Ausführungsform eines erfindungsgemäßen Hülsengelenkes wird nachfolgend unter Bezugnahme auf die zugehörige Zeichnung näher beschrieben.
Es zeigen:
- Figur 1:: eine ausschnittsweise Schnittdarstellung eines erfindungsgemäßen Hülsengelenkes
und
- Figur 2:: ausschnittsweise einen Teil einer Radaufhängung eines Kraftfahrzeuges mit einem erfindungsgemäßen Hülsengelenk.

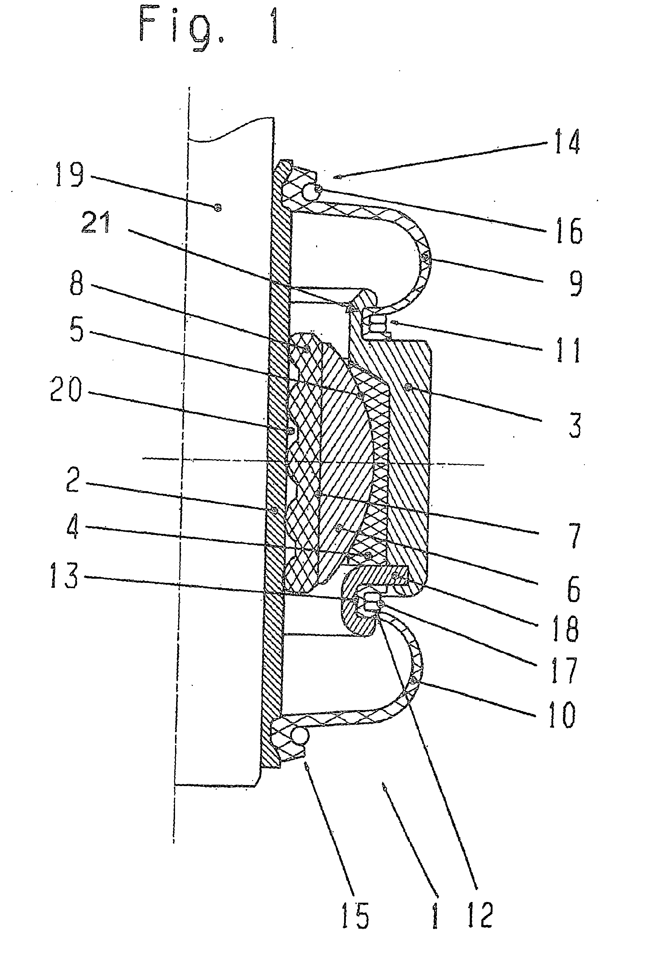

Die Figur 1 zeigt ausschnittsweise eine Schnittdarstellung durch ein bevorzugtes Ausführungsbeispiel eines erfindungsgemäßen Hülsengelenkes. Dieses besteht aus einer insgesamt mit 1 bezeichneten Lagerbaugruppe, welche axial verschiebbar über eine Gleitlagerung mit einem Innenteil 2 verbunden ist. Die Lagerbaugruppe 1 besteht ihrerseits aus einem Gehäuse 3, in welches eine Lagerschale 4 aus einem Kunststoff eingesetzt ist. Die Lagerschale 4 weist auf ihrer der Gehäuseinnenoberfläche abgewandten Innenseite eine zu einem Lagerkörper 6 komplementär gestaltete, gekrümmte Lagerfläche auf. Der Lagerkörper 6 verfügt demnach über eine in der Lagerschale 4 gleitend bewegbare gekrümmte Lagerfläche 5. Auf seiner der Lagerschale 4 abgewandten inneren Oberfläche 7 weist der Lagerkörper 6 eine Gleitschicht 8 auf. Diese Gleitschicht 8 steht über eine Vorspannung unmittelbar in Gleitkontakt mit dem Innenteil 2. Zur Verbesserung der Reibwerte sind an der Gleitschicht 8 Schmiertaschen 20 ausgebildet, welche als Fettreservoir dienen und in die ein Schmierfett eingebracht wurde. Das Innenteil 2 ist über eine Presspassung auf dem als Stabilisatorstab 19 ausgeführten zu lagernden Bauteil aufgesetzt. Um die empfindlichen inneren Gelenkbauteile des erfindungsgemäßen Hülsengelenkes gegen Eindringen von Verunreinigungen oder aggressiven Medien zu schützen, weist das in der Figur 1 dargestellte Hülsengelenk auf jeder seiner axial außen liegenden Seiten je einen Dichtungsbalg 9 bzw. 10 auf. Die Dichtungsbälge 9, 10 verfügen jeweils über einen ersten Randbereich 11 bzw. 12 sowie über einen zweiten Randbereich 14 bzw. 15. Der erste Randbereich 11, 12 der Dichtungsbälge 9, 10 ist jeweils in eine Gehäuseaufnahme 13 eingesetzt. Dabei sind in der Figur 1 zwei unterschiedliche Befestigungsmöglichkeiten dieses ersten Randbereiches der Dichtungsbälge dargestellt. Im oberen Bildteil ist der erste Randbereich 11 des Dichtungsbalges 9 innerhalb einer Nut 21 im Gehäuse 3 aufgenommen. Er wird mittels eines Spannringes 17 in diese Nut 21 eingepresst. Im unteren Bildteil der Figur 1 ist der Randbereich 12 des Dichtungsbalges 10 in einen Verschlussring 18 eingesetzt und innerhalb dieses Verschlussringes 18 über einen Spannring 17 gehalten. Der Verschlussring 18 ist seinerseits durch eine umgeformte Rollkante des Gehäuses 3 mit diesem unlösbar verbunden. Er dient gleichzeitig als Axialsicherung der Lagerschale 4 innerhalb des Gehäuses 3. Um den zweiten Randbereich 14 bzw. 15 der Dichtungsbälge 9 bzw. 10 auf dem Innenteil 2 festzusetzen und damit eine Abdichtung des Hülsengelenkes zu erreichen, wird ein Spannring 16 eingesetzt, der den Dichtungsbalgrandbereich 14 bzw. 15 festlegt.

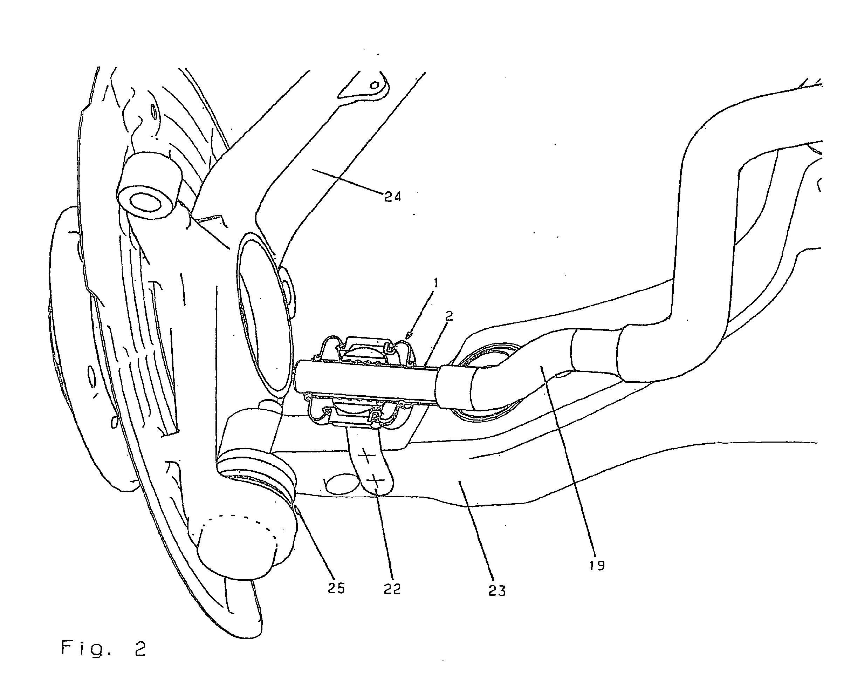

In der Figur 2 ist ausschnittsweise ein Teil einer Radaufhängung eines Kraftfahrzeuges mit einem erfindungsgemäßen Hülsengelenk gezeigt. Das Hülsengelenk, bestehend aus der Lagerbaugruppe 1, welche in Längsrichtung des Hülsengelenkes gleitbeweglich auf das Innenteil 2 aufgesetzt ist, wird bei der Darstellung in Figur 2 mittels eines Flansches 22 an einem Querlenker 23 einer Kraftfahrzeugradaufhängung befestigt. Zur Anbringung dient eine Verschraubung, die durch Kreuze am Flansch 22 in der Zeichnung lediglich angedeutet wurde. Der Flansch 22 wird bei der gezeigten Ausführung einteilig mit dem Gehäuse 3 des Hülsengelenkes ausgeführt, das heißt er ist an dem Gehäuse angeformt. Der Querlenker 23 wird über ein als Traggelenk ausgeführtes Kugelgelenk 25 mit einem Radträger beziehungsweise Achsschenkel 24 der Radaufhängung verbunden. Pendelstützen können durch den Einsatz eines erfindungsgemäßen Hülsengelenkes bei einer Radaufhängung entfallen.

### Bezugszeichenliste:

1. Lagerbaugruppe
2. Innenteil
3. Gehäuse
4. Lagerschale
5. gekrümmte Lagerfläche
6. Lagerkörper
7. Oberfläche
8. Gleitschicht
9. Dichtungsbalg
10. Dichtungsbalg
11. Erster Randbereich
12. Erster Randbereich
13. Gehäuseaufnahme
14. Zweiter Randbereich
15. Zweiter Randbereich
16. Spannring
17. Spannring
18. Verschlussring
19. Stabilisatorstab
20. Schmiertasche
21. Nut
22. Flansch
23. Querlenker
24. Radträger (Achsschenkel)
25. Kugelgelenk (Traggelenk)

## Patentansprüche

1. Hülsengelenk mit einer Lagerbaugruppe (1), die ein Gehäuse (3) sowie eine in das Gehäuse (3) eingesetzte Lagerschale (4) zur gleitbeweglichen Lagerung eines mit einer gekrümmten Lagerfläche (5) ausgestatteten Lagerkörpers (6) aufweist, wobei der Lagerkörper (6) auf seiner der gekrümmten Lagerfläche abgewandten inneren Oberfläche (7) mit einer Gleitschicht (8) versehen ist, wobei der Lagerkörper (6)
auf einem auf das zu lagernde Bauteil (19) über eine Presspassung aufsetzbaren Innenteil (2) des Hülsengelenkes angeordnet ist, sodass infolge des Gleitkontaktes zwischen der Lagerbaugruppe (1) und dem Innenteil (2) eine Gleitbewegung der Lagerbaugruppe (1) in Längsrichtung des Hülsengelenkes ermöglicht ist.

2. Hülsengelenk nach Anspruch 1,
**dadurch gekennzeichnet, dass**
das nach außen abgedichtete Hülsengelenk eine Fettschmierung der gleitbeweglichen Lagerteile (6, 2, 4) aufweist.

3. Hülsengelenk nach Anspruch 2,
**dadurch gekennzeichnet, dass**
die Abdichtung des Hülsengelenkes aus zwei Dichtungsbälgen (9, 10) besteht, deren erster Randbereich (11, 12) in eine Gehäuseaufnahme (13) eingesetzt ist und deren zweiter Randbereich (14, 15) dichtend an dem Innenteil (2) angesetzt ist.

4. Hülsengelenk nach Anspruch 3,
**dadurch gekennzeichnet, dass**
die Gehäuseaufnahme (13) eine Nut (21) in der Gehäuseaußenoberfläche oder ein mit dem Gehäuse (3) verbundener, den Dichtungsbalgrandbereich (11, 12) aufnehmender Verschlussring (18) ist.

5. Hülsengelenk nach Anspruch 3 oder 4,
**dadurch gekennzeichnet, dass**
die Dichtungsbälge (9, 10) durch Spannringe (16, 17) an den zugeordneten Bauteilen festgelegt sind.

6. Hülsengelenk nach einem der vorstehend genannten Ansprüche,
**dadurch gekennzeichnet, dass**
die Gleitschicht (8) aus einem reibungsarmen Kunststoff oder aus einem synthetischen Kautschuk besteht.

7. Hülsengelenk nach Anspruch 6,
**dadurch gekennzeichnet, dass**
der Gleitschichtwerkstoff spritzbar ist.

8. Hülsengelenk nach einem der vorstehend genannten Ansprüche,
**dadurch gekennzeichnet, dass**
die Gleitschicht (8) über eine Presspassung in den Lagerkörper (6) eingesetzt ist.

9. Hülsengelenk nach einem der vorstehend genannten Ansprüche,
**dadurch gekennzeichnet, dass**
die Gleitschicht (8) unter einer Vorspannung auf das Innenteil (2) aufgesetzt ist.

10. Hülsengelenk nach einem der vorstehend genannten Ansprüche,
**dadurch gekennzeichnet, dass**
die Gleitschicht (8) an ihrer Kontaktoberfläche zum Innenteil (2) fettbefüllte Schmiertaschen (20) aufweist.

11. Hülsengelenk nach einem der vorstehend genannten Ansprüche,
**dadurch gekennzeichnet, dass**
die Gleitschicht (8) an ihrer Kontaktoberfläche zum Innenteil (2) eine Labyrinthdichtung aufweist, die vorzugsweise an den äußeren Randbereichen der Gleitschicht (8) angeordnet ist.

12. Hülsengelenk nach einem der vorstehend genannten Ansprüche,
**dadurch gekennzeichnet, dass**
das Innenteil (2) ein gezogenes, vorzugsweise aus Aluminium hergestelltes, rohrförmiges Bauteil ist.

13. Radaufhängung mit einem Hülsengelenk nach einem der vorstehend genannten Ansprüche, bei welcher
das Hülsengelenk auf einen Stabilisatorstab (19) des Kraftfahrzeuges aufgesetzt ist.

14. Radaufhängung nach Anspruch 13, bei welcher
die Verbindung zwischen Stabilisatorstab (19) und Innenteil (2) des Hülsengelenkes eine Presspassung ist.

15. Radaufhängung nach Anspruch 13, bei welcher
das Hülsengelenk mittels eines Flanschlagers oder über mindestens eine am Gehäuse (3) vorhandene Lasche oder einen Flansch (22) unmittelbar am unteren Querlenker des Kraftfahrzeuges befestigt ist.

## Claims

1. Sleeve coupling, comprising a bearing assembly (1) having a housing (3) and a bearing shell (4) inserted in the housing (3) for slidable mounting of a bearing body (6) having a curved bearing surface (5), the bearing body (6) being provided with a sliding layer (8) on its inner surface (7) facing away from the curved bearing surface, wherein the bearing body (6) is arranged on an inner part (2) of the sleeve coupling that can be applied to the component (19) to be supported via a press fit, so that a sliding movement of the bearing assembly (1) in the longitudinal direction of the sleeve coupling is made possible as a result of the sliding contact between the bearing assembly (1) and the inner part (2).

2. Sleeve coupling according to claim 1, **characterised in that** the sleeve coupling, that is sealed to the outside, has grease lubrication of the slidingly movable bearing parts (6, 2, 4).

3. Sleeve coupling according to claim 2, **characterised in that** the sealing of the sleeve coupling consists of two sealing bellows (9, 10), the first edge portion (11, 12) of which is inserted in a receptacle (13) of the housing and the second edge portion (14, 15) of which is applied sealingly to the inner part (2).

4. Sleeve coupling according to claim 3, **characterised in that** the receptacle (13) of the housing is a groove (21) in the outer housing surface or a sealing ring (18) connected to the housing (3) and receiving the edge portion (11, 12) of the sealing bellows.

5. Sleeve coupling according to claim 3 or 4, **characterised in that** the sealing bellows (9, 10) are fixed to the associated components by means of clamping rings (16, 17).

6. Sleeve coupling according to any one of the preceding claims, **characterised in that** the sliding layer (8) consists of a low-friction plastics material or a synthetic rubber.

7. Sleeve coupling according claim 6, **characterised in that** the material of the sliding layer can be injection-moulded.

8. Sleeve coupling according to any one of the preceding claims, **characterised in that** the sliding layer (8) is inserted into the bearing body (6) via a press fit.

9. Sleeve coupling according to any one of the preceding claims, **characterised in that** the sliding layer (8) is applied to the inner part (2) under a preload.

10. Sleeve coupling according to any one of the preceding claims, **characterised in that** the sliding layer (8) has grease-filled lubrication pockets (20) on its surface in contact with the inner part (2).

11. Sleeve coupling according to any one of the preceding claims, **characterised in that** the sliding layer (8) has a labyrinth seal on its surface in contact with the inner part (2), which labyrinth seal is preferably arranged on the outer edge portions of the sliding layer (8).

12. Sleeve coupling according to any one of the preceding claims, **characterised in that** the inner part (2) is a drawn tubular component preferably manufactured from aluminium.

13. Wheel suspension having a sleeve coupling according to any one of the preceding claims, in which the sleeve coupling is attached to an anti-roll bar (19) of the motor vehicle.

14. Wheel suspension according to claim 13, in which the connection between the anti-roll bar (19) and the inner part (2) of the sleeve coupling is a press fit.

15. Wheel suspension according to claim 13, in which the sleeve coupling is fixed directly to the lower suspension arm of the motor vehicle by means of a flange-type bearing or via at least one shackle or flange (22) present on the housing (3).

## Revendications

1. Articulation à douille comportant un module de coussinet (1), qui comporte un boîtier (3) ainsi qu'une coquille de coussinet (4) insérée dans le boîtier (3) et supportant avec possibilité de glissement, un corps de coussinet (6) équipé d'une surface de coussinet (5) cintrée, le corps de coussinet (6) étant pourvu d'une couche de glissement. (8) sur sa surface intérieure (7) tournée à l'opposé de la surface de coussinet cintrée, le corps de coussinet (6) étant disposé sur une partie intérieure (2) de l'articulation à douille, qui peut être montée au moyen d'un ajustement serré sur le composant devant être supporté (19), de sorte qu'en raison du contact glissant entre le module de coussinet (1) et la partie intérieure (2), un mouvement de glissement du module de coussinet (1) dans la direction longitudinale de l'articulation à douille est possible.

2. Articulation à douille selon la revendication 1, **caractérisée en ce que** l'articulation à douille, étanchéifiée vis-à-vis de l'extérieur, possède une lubrification à la graisse des parties de coussinet (6, 2, 4) mobiles avec glissement.

3. Articulation à douille selon la revendication 2, **caractérisée en ce que** l'étanchéité de l'articulation à douille est constituée de deux soufflets d'étanchéité (9, 10), dont la première partie marginale (11, 12) est insérée dans un logement (13) du boîtier et dont la seconde partie marginale (14, 15) est appliquée de façon étanche contre la partie intérieure (2).

4. Articulation à douille selon la revendication 3, **caractérisée en ce que** le logement (13) du boîtier est une gorge (21) formée dans la surface extérieure du boîtier ou une bague de fermeture (18) qui est reliée au boîtier (3) et qui loge la partie marginale (11, 12) du soufflet d'étanchéité.

5. Articulation à douille selon la revendication 3 ou 4, **caractérisée en ce que** les soufflets d'étanchéité (9, 10) sont fixés par des bagues de serrage (16, 17) aux composants associés.

6. Articulation à douille selon l'une des revendications précédentes, **caractérisée en ce que** la couche de glissement (8) est constituée par une matière plastique ayant un frottement faible ou par un caoutchouc synthétique.

7. Articulation à douille selon la revendication 6, **caractérisée en ce que** le matériau de la couche de glissement peut être moulé par injection.

8. Articulation à douille selon l'une des revendications précédentes, **caractérisée en ce que** la couche de glissement (8) est insérée au moyen d'un ajustement serré dans le corps de coussinet (6).

9. Articulation à douille selon l'une des revendications précédentes, **caractérisée en ce que** la couche de glissement (8) est montée moyennant une précontrainte sur la partie intérieure (2).

10. Articulation à douille selon l'une des revendications précédentes, **caractérisée en ce que** la couche de glissement (8) possède, sur sa surface de contact avec la partie intérieure (2), des logements pour lubrification (20) remplis de graisse.

11. Articulation à douille selon l'une des revendications précédentes, **caractérisée en ce que** la couche de glissement (8) comporte, sur sa surface de contact avec la partie intérieure (2), une garniture d'étanchéité à labyrinthe, qui est disposée de préférence sur les parties marginales extérieures de la couche de glissement (8).

12. Articulation à douille selon l'une des revendications précédentes, **caractérisée en ce que** la partie intérieure (2) est un composant de forme tubulaire étirée, de préférence réalisée en aluminium.

13. Suspension de roue comportant une articulation à douille selon l'une des revendications précédentes, dans laquelle l'articulation à douille est montée sur une barre de stabilisation (19) du véhicule automobile.

14. Suspension de roue selon la revendication 13, dans laquelle la liaison entre la barre de stabilisation (19) et la partie intérieure (2) de l'articulation à douille est un ajustement serré.

15. Suspension de roue selon la revendication 13, dans laquelle l'articulation à douille est fixée à l'aide d'un coussinet à bride ou au moyen d'une patte présente sur le boîtier (3) ou au moyen d'une bride (22) directement sur le bras articulé transversal inférieur du véhicule automobile.
